# EUROPEAN PATENT SPECIFICATION

(11) **EP 1 820 408 B1**
(45) Date of publication and mention of the grant of the patent: **01.10.2008**
(21) Application number: 07250500.1
(22) Date of filing: 07.02.2007
(51) Int. Cl.: A23L 1/29

(54) **Brown rice having increased contents of functional components and method for manufacturing the same**
Naturreis mit erhöhtem Anteil funktionaler Komponenten und entsprechendes Produktionsverfahren
Riz brun ayant un contenu accru de composants fonctionnels et son procédé de fabrication

(30) Priority: 17.02.2006 JP 2006041074
(43) Date of publication of application: 22.08.2007
(73) Proprietor: SATAKE CORPORATION, Chiyoda-ku, Tokyo 101-0021 (JP)
(72) Inventor: Fukumori, Takeshi, Chiyoda-ku Tokyo 101-0021 (JP); Kanemoto, Shigeharu, Chiyoda-ku Tokyo 101-0021 (JP); Hou, Qing Liu, Chiyoda-ku Tokyo 101-0021 (JP); Mizuno, Hidenori, Chiyoda-ku Tokyo 101-0021 (JP); Kawano, Motonobu, Chiyoda-ku Tokyo 101-0021 (JP)
(74) Representative: Billington, Lawrence Emlyn

(56) References cited:
- WO-A-20/04073613
- JP-A- 2005 117 982

## Description

### BACKGROUND OF THE INVENTION

### Field of the Invention

The present invention relates to a method for increasing the functional components contained in brown rice and brown rice manufacturing by this method.

### Description of the Related Art

These days, γ-aminobutyric acid (GABA) has been attracting attention as a substance effective in health maintenance or the prevention of diseases, such as the suppression of a blood pressure increase of human body, and for this reason, it is general practice that the content of γ-aminobutyric acid contained in cereals such as brown rice, and the like is raised. For example, Japanese Patent Application Laid-Open No. 2005-52073 discloses a method that involves adding water to brown rice to increase the moisture thereof to not less than 20%, feeding the brown rice to which water has been thus added into a tank that is separately disposed, and tempering the brown rice while performing the ventilation within the tank, whereby the amount of the γ-aminobutyric acid contained in the brown rice is increased.

In this method, however, it is necessary to add water again to the brown rice after drying until the moisture exceeds 20%, and for this purpose, it is necessary to add water to the brown rice at water addition rates of not less than 0.5%/hour. In the processing of brown rice to which water is thus added again, the eating quality of brown rice decreases and there is a fear that damage, such as rice crack, may occur. Because it is necessary to add water again to the brown rice that has been dried and to dry again the brown rice, this poses the problem that the manufacturing cost is high compared to usual brown rice.

For this reason, to prevent a decrease in eating quality and reduce the cost necessary for adding water to brown rice and the cost necessary for redrying, it is strongly desired that adding water to brown rice be limited to a requisite minimum and that the water addition rate be lowered in order to prevent damage such as rice crack.

Also, it is known that by sprouting brown rice, the γ-aminobutyric acid contained in the brown rice can be substantially increased. However, it is considered that sprouted brown rice that is obtained by sprouting the brown rice is inferior to usual white rice in eating quality as disclosed in Japanese Patent Application Laid-Open No. 2005-168444. For this reason, it is desired that without causing brown rice to sprout, the amount of the γ-aminobutyric acid contained in the brown rice be increased to higher amounts than in usual brown rice.

### SUMMARY OF THE INVENTION

In view of the above problem, an object of the present invention is to provide a technique for limiting the water addition to brown rice to a requisite minimum and substantially increasing the functional components, such as γ-aminobutyric acid, contained in rice grains compared to usual brown rice even with the water addition at a low seed.

To solve the above problem, in the present invention there is devised technical means in which by use of a device having a construction similar to that of a grain dryer, high-humidity air is applied to brown rice that is being transferred in a circulating manner through the device, the moisture (or percentage of moisture content) of the brown rice is increased in the range of 16.5 to 18.5% at water addition rates of not more than 0.3%/hour and thereafter the brown rice is left at rest in the device, with the ventilation and circulated transfer stopped, whereby the functional components contained in the brown rice, such as γ-aminobutyric acid, are increased.

In the present invention, brown rice having increased contents of functional components is manufactured, this brown rice is milled and processed into partially-milled rice, rice with germs (or embryo-remaining rice) and white rice (or milled rice), all of which have increased contents of functional components, and these are further processed into clean washed partially-milled rice, clean washed rice with germs and clean washed rice. Incidentally, "clean washed rice" refers to rice which was refined to the extent that no rice washing is required in rice cooking.

According to a manufacturing method for brown rice having increased contents of functional components in the present invention, it is unnecessary to raise the moisture of brown rice, which is the raw material, to higher than 18.5%. This enables water addition to be performed at very low water addition rates and it is possible to prevent damage such as rice crack. Also, it becomes possible to reduce the cost necessary for water addition and at the same time, it becomes possible to reduce also the cost necessary for drying after water addition. Furthermore, because the moisture of brown rice, which is the raw material, does not exceed 18.5%, the brown rice will not sprout. For this reason, it becomes possible to prevent a decrease in eating quality due to germination and when the brown rice is milled into white rice, it is possible to eat the white rice as usual cooked rice.

### BRIEF DESCRIPTION OF THE DRAWINGS

The above-described object, other objects and features of the present invention will be apparent from the following description of embodiments, taken in conjunction with the accompanying drawings, in which:
FIG. 1 is a flow chart that shows a method for increasing the functional components contained in brown rice;
FIG. 2 is a partially broken, schematic front view of a water adding and drying device that carries out a method for the present invention;
FIG. 3 is a partially broken, schematic side view of the water adding and drying device shown in FIG. 2;
FIG. 4 shows the cross-sectional view of a water adding and drying part of the water adding and drying device shown in FIG. 2 and explains flows of moistened air and hot air;
FIG. 5 is a control block diagram of the water adding and drying device that carries out a method according to the present invention;
FIG. 6 is a diagram that shows the construction of a device for manufacturing rice with germs, which is used to mill function-enriched brown rice into rice with germs;
FIG. 7 is a partial longitudinal sectional view of a abrasive type rice milling machine constituting the device for manufacturing rice with germs of FIG. 6; and
FIG. 8 is a diagram that shows a manufacturing method for clean washed rice.

### DETAILED DESCRIPTION OF THE PREFERRED EMBODIMENTS

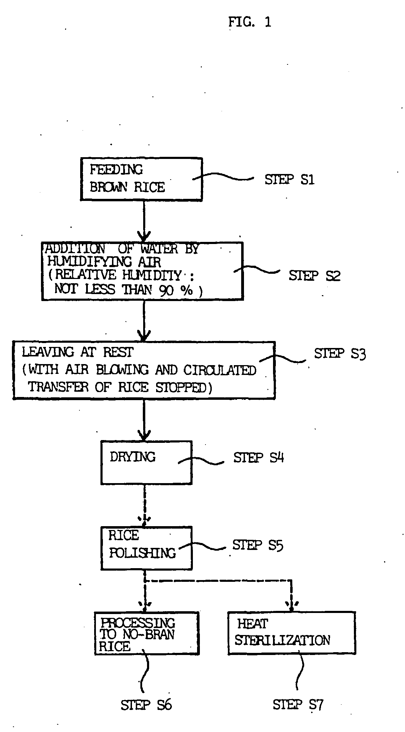

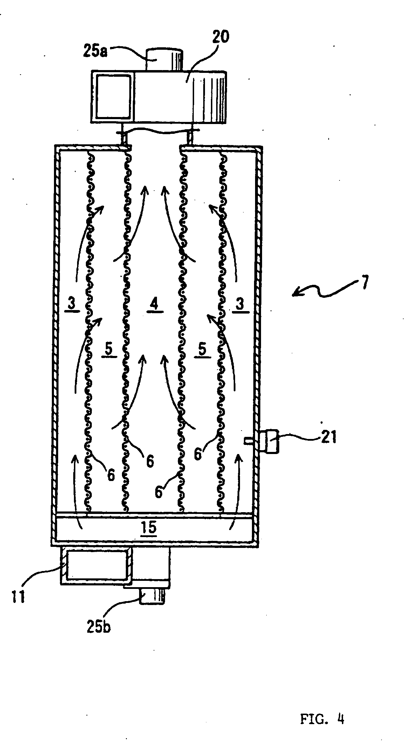

A method for increasing the functional components contained in brown rice according to the present invention and an apparatus for carrying out the method will be described by using FIGS. 1 to 5.

A water adding and drying device 1 has almost the same construction as a general circulating type grain dryer and is provided with a storage part 2 that stores brown rice, a water adding and drying part 7 that blows high-humidity air (hereinafter referred to as "moistened air") or hot air against the brown rice, and a discharge part 10 that discharges the brown rice in the water adding and drying part 7 to outside the device.

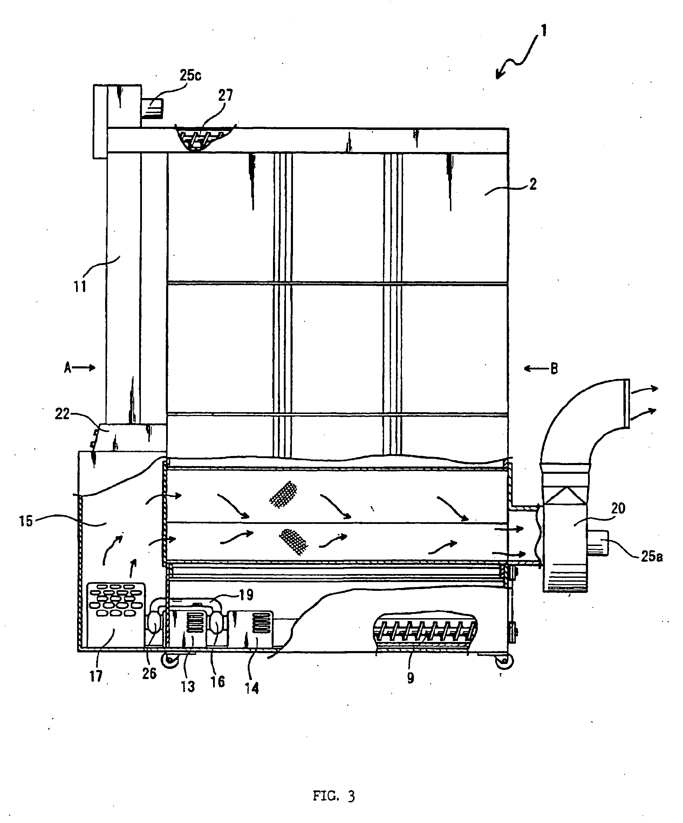

In the water adding and drying part 7, an air feeding passage 3, an air exhausting passage 4 and a grain flow-down tank 5 connected to the storage part 2 are partitioned from each other by a plurality of perforated plates 6 disposed between one side in the longitudinal direction (hereinafter referred to as " A side") and the other side (hereinafter referred to a "B side") shown in FIG. 3.

In the discharge part 10, a discharge valve 8 for intermittently discharging brown rice is provided on a bottom end side of an imperforate plate 12, which is inclined by being connected to the grain flow-down tank 5. Furthermore, below this discharge valve 8 is disposed a lower screw conveyor 9, which discharges the brown rice delivered from the discharge valve 8 to outside the device while horizontally transferring the brown rice. The brown rice discharged by the lower screw conveyor 9 is transferred in a circulatingmanner to the storage part 2 via a bucket conveyor 11 and an upper screw conveyor 27. Incidentally, a bucket-conveyor motor 25c is attached above the bucket conveyor 11 so that the bucket conveyor 11 and the upper screw conveyor 27 are driven by the power from this bucket-conveyor motor 25c. Furthermore, a takeout-part motor 25b is attached to the discharge part 10 so that the discharge valve 8 and the lower screw conveyor 9 are driven by the power from this takeout-part motor 25b.

A hot-air generation burner 14 that uses kerosene as the fuel and a moistening device 13 are provided in the lower part on the A side, and an air exhausting fan 20 provided with a fan motor 25a is provided in the lower part on the B side. The hot-air generation burner 14 is connected to a flow-passage changeover valve 16. The air exhausting fan 20 is connected to the B side of the air discharge passage 4 of the water adding and drying part 7, and this fan 20 sucks the hot air in the air discharge passage 4 and discharges the hot air to outside the machine. A temperature/humidity sensor 21 that detects the temperature and humidity of the moistened air and hot air is attached in the vicinity of a supply port of the air feed passage 3 to which hot air is supplied, and a moisture meter 18 that detects moisture values of grain is attached to one side of the bucket conveyor 11.

During water addition, hot air generated by the hot-air generation burner 14 passes through the moistening device 13 via the flow-passage changeover valve 16 by the suction action of the air exhausting fan 20 and becomes moistened air, which passes through an ventilation port 17, a front air passage 15, the air feeding passage 3, the grain flow-down tank 5 and the air exhausting passage 4 and is discharged from the air exhausting fan 20 to outside the machine. On the other hand, during drying, the hot air flows through a bypass air passage 19 by the flow-passage changeover valve 16, passes through the ventilation port 17, the front air passage 15, the air feeding passage 3, the grain flow-down tank 5 and the air exhausting passage 4, and is discharged from the air exhausting fan 20 to outside the machine.

Incidentally, immediately after the start of drying, in order to prevent checking of brown rice due to abrupt drying, part of the hot air is caused to pass through the moistening device 13, whereby the relative humidity of the hot air passing through there is increased, this hot-humidity hot air and the hot air that has passed through the bypass air passage 19 are mixed in a connecting valve 26, where the hot air is converted into hot air having a relative humidity of 75% or so. It is desirable to perform drying by using this hot air.

Referring now to FIG. 3, the construction of the moistening device 13 and the hot-air generation burner 14 are described below.

Although a general vaporizing type moistening device is used as the moistening device 13 in this embodiment, those of other moistening methods, such as a steam type, may also be used. It is possible to use a type generally used in a grain dryer as the hot-air generation burner 14. The moistening device 13 and the hot-air generation burner 14 are connected together via the flow-passage changeover valve 16. This flow-passage changeover valve 16 can change over the flow passage so that the whole amount of the hot air generated by the hot-air generation burner 14 passes through the moistening device 13 during water addition while the whole amount of the hot air passes through the bypass air passage 19 during drying. Also, in order to regulate the humidity of the hot air during drying, the flow-passage changeover valve 16 can cause a part of the hot air to pass through the moistening device 13 and the remaining part to pass through the bypass air passage 19.

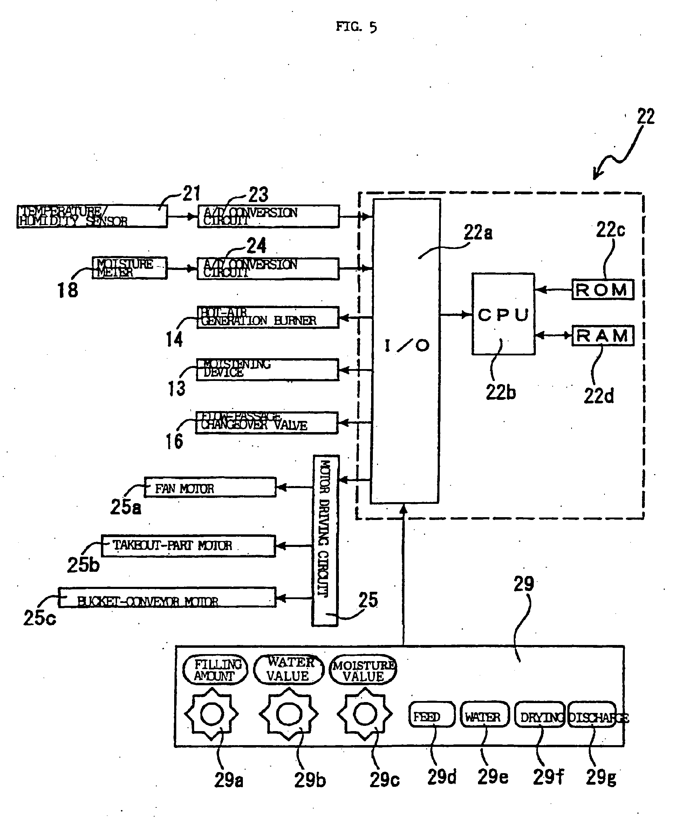

The control of each part of the water adding and drying device 1 is performed by a control part 22. This control part 22 is provided on the A side of the water adding and drying device 1. As shown in FIG. 5, the control part 22 is constituted by a CPU 22b, and an input/output port 22a, a storage part 22c (hereinafter referred to as "ROM") for readout only and a storage part 22d for writing/reading (hereinafter referred to as "RAM"), which are each connected to the CPU 22b. Programs for performing water adding operation and drying operation are stored beforehand in the ROM 22c.

The temperature/humidity sensor 21 is connected to the input/output port 22a via an A/D conversion circuit 23, and the moisture meter 18 is connected to the input/output port 22a via an A/D conversion circuit 24. Furthermore, the moistening device 13, the hot-air generation burner 14, the flow-passage changeover valve 16 and an input/output part 29 are each connected to the input/output port 22a. To this input/output port 22a are further connected the fan motor 25a, the takeout-part motor 25b and the bucket-conveyor motor 25c via a motor driving circuit 25.

The input part 29 is provided with a filling amount setting switch 29a that sets filling amount, a water addition setting switch 29b that sets water values during water addition, a moisture setting switch 29c that sets moisture values upon completion of drying, a filling button 29d that starts filling operation, a water addition button 29e that starts water addition, a drying button 29f that starts drying, a discharge button 29g that discharges grain, and the like. When these switches and buttons are operated, corresponding control signals are transmitted to the CPU 22b. This CPU 22b executes a program for water adding operation, a program for drying operation and the like.

Next, the operation of the water adding and drying device 1 of the present invention will be described. First, the water adding operation will be described.

Brown rice, which is the raw material, is charged into the water adding and drying device 1 (Step S1), and a brown rice feeding amount and a target moisture value during water addition are set by use of the filling amount setting switch 29a and the water addition setting switch 29b. When the water addition button 29e is depressed after the setting of these values, the program for water adding operation incorporated in the ROM 22c is executed by the CPU 22b (Step S2). When the program for water adding operation is executed, a current is supplied to each of the fan motor 25a, the takeout-part motor 25b and the bucket-conveyor motor 25c, and each of the air exhausting fan 20, the discharge valve 8, the lower screw conveyor 9, the bucket conveyor 11 and the upper screw conveyor 27 starts operation.

Also, the moistening device 13 and the hot-air generation burner 14 start operation and start the generation of moistened air. The set humidity and temperature of the moistened air for ventilation that is passed through the grain flow-down tank 5 in the water adding and drying part 7 are determined on the basis of the above-described brown rice feeding amount and the target moisture value during water addition which were set at the start of the water adding operation. And the combustion level of the hot-air generation burner 14 is changed on the basis of a humidity and temperature detected by the temperature/humidity sensor 21 so that the humidity and temperature of the moistened air for ventilation that is passed through the grain flow-down tank 5 become the set humidity and temperature, respectively.

During the water adding operation, the above-described set humidity and temperature are changed according to a grain moisture value measured at any time by the moisture meter 18. The combustion level of the hot-air generation burner 14 is changed so that the humidity and temperature of the moistened air become the changed set humidity and temperature.

Incidentally, the air volume ratio of the moistened air for ventilation that is passed through the grain flow-down tank 5 during the water adding operation can be regulated in the range of 0. 2 to 0. 6 cubic meter/second·ton. This air volume ratio is preferably 0.3 to 0.5 cubic meter/second·ton, more preferably 0. 3 to 0. 35 cubic meter/second·ton. It is preferred that the temperature of the moistened air be not more than 35°C.

The moistened air generated by the moistening device 13 and the hot-air generation burner 14 is applied to the brown rice that has flown down from the storage tank 2 into the grain flow-down tank 5 in the water adding and drying part 7 and water is added to the brown rice. The brown rice to which water has been thus added is discharged from the grain flow-down tank 5 by the discharge valve 8, and then transferred in a circulating manner into the storage tank 2 via the bucket conveyor 11 and the upper screw conveyor 27. This circulated transfer to the storage tank 2 is continued until moisture values measured at any time by the moisture meter 18 reach the above-described target moisture value during water addition. The water adding operation is stopped when the moisture of the brown rice to which water is being added while being transferred in a circulating manner through the water adding and drying device 1 reaches the target moisture value during water addition. After the completion of the water adding operation, the circulated transfer of the brown rice and the ventilation of the brown rice with the moistened air are stopped and the brown rice for which water addition has been completed is left at rest in the water adding and drying device 1 (Step S3).

Because in the present invention the brown rice moisture during water addition is limited to not more than 18.5%, it is possible to leaving the brown rice at rest, with circulated transfer and ventilation not performed. The time for leaving the brown rice at rest, which depends on the amount of the γ-aminobutyric acid to be increased, is 10 hours or so. This time can be easily changed, and may be adjusted in the range of 2 to 25 hours. The time for leaving the brown rice at rest is preferably in the range of 8 to 12 hours, more preferably in the range of 9 to 11 hours.

After leaving the brown rice at rest, the drying operation is started (Step S4). By setting a drying finish target moisture and depressing the drying button 29f, the program for drying operation incorporated in the ROM 22c is executed by the CPU 22b and the drying operation is started. When the program for drying operation is executed, a current is supplied to each of the fan motor 25a, the takeout-part motor 25b and the bucket-conveyor motor 25c, and each of the air exhausting fan 20, the discharge valve 8, the lower screw conveyor 9, the bucket conveyor 11 and the upper screw conveyor 27, all of which have remained at still up to now, starts operation. Also, the hot-air generation burner 14 starts operation and starts the generation of hot air.

A set hot-air temperature of the hot air to be fed in the grain flow-down tank 5 of the water adding and drying part 7 is determined on the basis of the drying finish target moisture which was set at the start of the drying operation. And the combustion level of the hot-air generation burner 14 is changed so that a detected temperature of the temperature/humidity sensor 21 becomes the above-described set hot-air temperature. During the drying operation, the above-described set hot-air temperature is changed according to grain moisture values determined at any time by the moisture meter 18. The combustion level of the hot-air generation burner 14 is changed so that the temperature of the hot air to be fed in the grain flow-down tank 5 becomes the updated set hot-air temperature.

The brown rice that has flown down from the storage tank 2 into the grain flow-down tank 5 of the water adding and drying part 7 is dried by ventilation of the hot air generated by the hot-air generation burner 14. The brown rice that is thus dried in the grain flow-down tank 5 is transferred in a circulating manner to the storage tank 2 via the discharge part 10, the bucket conveyor 11 and the upper screw conveyor 27. This circulated transfer to the storage tank 2 is continued until moisture values of the brown rice measured at any time by the moisture meter 18 reach the above-described drying finish target moisture. The drying operation is stopped when the brown rice is dried up to the drying finish target moisture.

It is possible to handle brown rice for which drying has been completed in the same manner as in the case of usual brown rice. Because in the present invention the drying step using hot blast is performed after the water adding operation, it is possible to stop fungi from flourishing in the water adding and drying device 1, and this is hygienic.

Next, a description will be given of a processing (milling) method for a brown rice having increased contents of functional components, such as γ-aminobutyric acid, (hereinafter referred to as "function-enriched brown rice") that is manufactured by the manufacturing method for the present invention. The function-enriched brown rice manufactured by the manufacturing method for the present invention differs from usual brown rice only in that the amount of the γ-aminobutyric acid contained in rice grains is increased, and other properties of the function-enriched brown rice are the same as with usual brown rice. Therefore, the function-enriched brown rice can be handled or processed in the same manner as in the case of usual brown rice.

First, a method for rice milling will be described. Rice milling can be performed with a conventional method, and the function-enriched brown rice can be milled into partially-milled rice, rice with germs and white rice according to the purpose (Step S5).

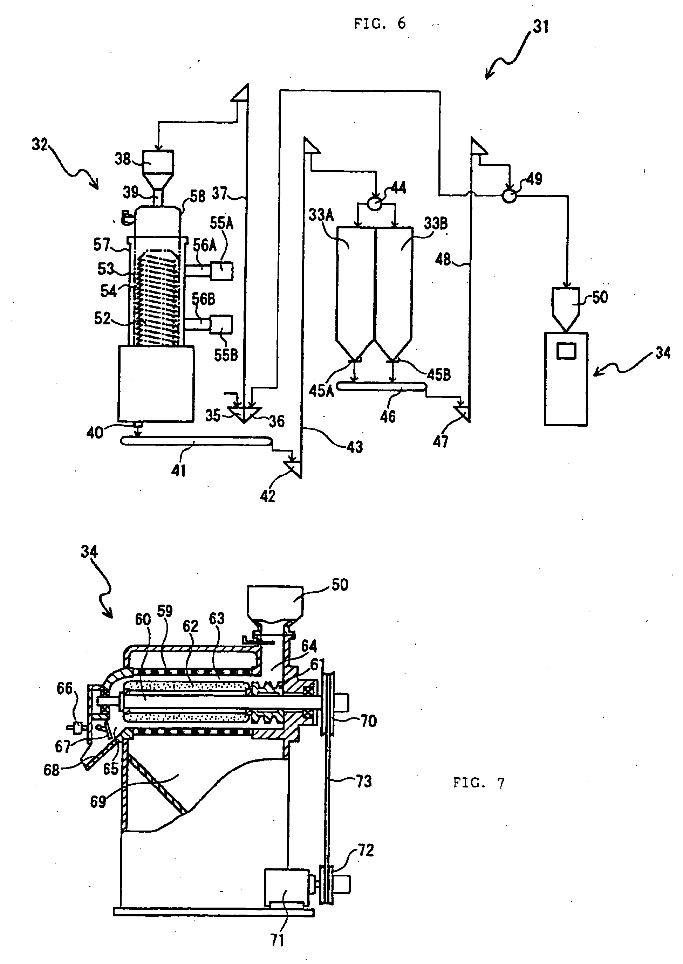

For milling the above-described function-enriched brown rice into rice with germs, a conventional method as described in Japanese Patent Application Laid-Open No. 6-209724, for example, may be used. An outline of this method will be given by referring to FIGS. 6 and 7. FIG. 6 is a diagram that shows the construction of a device 31 for manufacturing rice with germs, which is used for milling function-enriched brown rice into rice with germs, and FIG. 7 is a partial longitudinal sectional view of a abrasive type rice milling machine 34.

The device 31 for manufacturing rice with germs is constituted by a microwave heating device 32, cooling tanks 33A and 33B, and the abrasive type rice milling machine 34. Rice grains supplied to hoppers 35 and 36 which are provided in a lower part of a grain elevator 37, such as a bucket conveyor, are lifted by the grain elevator 37, discharged from a discharge port at the top end of the grain elevator 37, and fed to a feeding tank 38. The rice grains falling from the feeding tank 38 pass through a feeding trough 39 and fed into the main body of the microwave heating device 32.

The rice grains discharged from a discharge trough 40 of the microwave heating device 32 pass through a belt conveyor 41, a hopper 42, a grain elevator 43 and a changeover valve 44 and conveyed to the pair of cooling tanks 33A and 33B. And the rice grains discharged from discharge shutters 45A and 45B, which are each provided in discharge parts of the cooling tanks 33A and 33B, pass through a belt conveyor 46, a hopper 47, a grain elevator 48 and a changeover valve 49, and are supplied to a supply hopper 50 of the abrasive type rice milling machine 34.

The microwave heating device 32 has a spiral cylinder 52 that is provided within a cylindrical body 53 made of resin, which is installed in a standing manner, and that is rotatably driven by the rotation of a main shaft (not shown), and a flow-down passage 54 of brown rice is formed in the space formed by this spiral cylinder 52 and the cylindrical body 53. And two waveguides 56A and 56B are attached to a machine frame 57, to whose top end a cover cylinder 58 is connected, and one end of each of the waveguides 56A and 56B is caused to face the cylindrical body 53, whereas oscillators 55A and 55B are connected to the other end, whereby brown rice flowing down the flow-down passage 54 is irradiated with microwaves. The discharge trough 40 is provided in the lower part of the microwave heating device 32 and the rice grains falling from the discharge trough 40 are conveyed onto the belt conveyor 41 outside the machine.

As shown in FIG. 7, the abrasive type rice milling machine 34 is constituted by a perforated grain-milling cylinder 59 arranged with its axis in a horizontal direction, a main shaft 60 rotatably provided in this perforated grain-milling cylinder 59, and a spiral rotor 61 and a grain-ribbed rotor 62 which are provided on this main shaft 60. And one end of a grain-milling chamber 63 mainly constituted by the perforated grain-milling cylinder 59 and the grain-ribbed rotor 62 is caused to communicate with a brown rice supply port 64 and the other end thereof is caused to communicate with a milled rice discharge port 65. The milled rice discharge port 65 is provided with a resistance plate 67 urged by a weight 66, and milled rice discharged from the milled rice discharge port 65 falls down a discharge trough 68 and is discharged to outside the machine.

The bran that has passed through the openings of the perforated grain-milling cylinder 59 and fallen is collected in a bran collecting chamber 69. The bran collecting chamber 69 communicates with a dust collecting duct (not shown). A feed hopper 50 is provided above the brown rice supply port 64. A pulley 70 attached to the main shaft 60 is connected via a belt 73 to a pulley 72 attached to a motor 71.

Next, the operation of the device 32 for manufacturing rice with germs, shown in FIG. 6, and the abrasive type rice milling machine 34, shown in FIG. 7, will be described.

Function-enriched brown rice fed into the hopper 35 is lifted by the grain elevator 37 and fed in the feeding tank 38, flows down the feeding trough 39 connected to the feeding tank 38, and falls onto the top end of the spiral cylinder 52. The function-enriched brown rice that has fallen onto the top end of the spiral cylinder 52 flows down the flow-down passage 54 by the rotation of the spiral cylinder 52. The function-enriched brown rice flowing down the flow-down passage 54 is heated by microwaves which are oscillated by the microwave oscillator 55A and transmitted on the waveguide 56A and radiated. The function-enriched brown rice heated by the microwave oscillator 55A flows down the flow-down passage 54 and is then heated again by microwaves which are oscillated by the microwave oscillator 55B and transmitted on the waveguide 56B and radiated. The function-enriched brown rice heated by the microwave oscillator 55B flows further down the flow-down passage 54 and is discharged from the discharge trough 40 and supplied onto the belt conveyor 41.

The function-enriched brown rice that has been heated by the microwaves is conveyed from the belt conveyor 41 to the changeover valve 44 via the hopper 42 and the grain elevator 43, and is supplied from the changeover valve 44 to the cooling tank 33A or the cooling tank 33B dependent upon the changeover condition of the changeover valve 44.

The function-enriched brown rice whose temperature has been raised by the heating by use of the microwave heating device 32 is cooled in the cooling tanks 33A and 33B to temperatures which are lower than the temperature of grains before the heating. The function-enriched brown rice that has been cooled in the cooling tank 33A or the cooling tank 33B is discharged onto the belt conveyor 46 by opening the shutter 45A or the shutter 45B. The function-enriched brown rice that has been conveyed from the cooling tank 33A or the cooling tank 33B onto the belt conveyor 46 is conveyed to the changeover valve 49 via the hopper 47 and the grain elevator 48, supplied from the changeover valve 49 to the microwave heating device 32 via the hopper 36, the grain elevator 37, the feeding tank 38 and the feeding trough 39, and is again heated by microwaves.

When heating by the microwave heating device 32 and cooling by the cooling tank 33 are repeated a plurality of times in this way, the moisture of the function-enriched brown rice lowers to 13% or less and the temperature of the function-enriched brown rice lowers to temperature before the heating. Then, by changing over the changeover valve 49, the function-enriched brown rice passes through the changeover valve 49 from the grain elevator 48 and is supplied to the abrasive type rice milling machine 34 via the supply hopper 50.

The function-enriched brown rice that has been supplied from the supply port 64 of the abrasive type ricemillingmachine 34 to the spiral rotor 61 is horizontally transferred by the spiral rotor 61 toward the grain-milling chamber 63. In the grain-milling chamber 63, the function-enriched brown rice is milled by the grain-milling action generated by the rotation of the grain-ribbed rotor 62 and becomes function-enriched rice with germs.

Dust such as bran generated by the grain-milling action in the grain-milling chamber 63 is discharged by the suction action of a suction machine (not shown) from the openings of the perforated grain-milling cylinder 59 to the bran collecting chamber 69, and conveyed from the bran collecting chamber 69 into a bran collecting device, such as a cyclone separator (not shown).

The function-enriched rice with germs, obtained by milling function-enriched brown rice, flows out of the discharge port 65 while resisting the resistance plate 67 at the discharge port 65, flows down the discharge trough 68, and is discharged to outside the machine. The frequency of rice milling is not limited to once as in the case of this embodiment, and rice milling may be performed by providing a grain elevator in the abrasive type rice milling machine 34 and circulating grains a multiple of times by use of the grain elevator. Rice milling may also be performed by disposing a plurality of abrasive type rice milling machines 34 in series. Such a rice milling machine is not limited to the abrasive type and it is possible to use a conventional rice milling machine.

Incidentally, when milling function-enriched brown rice manufactured by the manufacturing method for the present invention into rice with germs, it is possible to obtain rice with germs by adjusting the milling yield during rice milling by use of a well-known rice milling machine, without performing heating with microwaves.

When brown rice grains become dried, the greater part of the moisture goes out of rice grains through germ portion and, therefore, the moisture in the junction between the germ of a rice grain and the albumen becomes highest. Because the energy of microwaves is absorbed in the moisture, the heat generation in the junction between the germ and the albumen where the moisture is highest becomes a maximum, with the result that the germ and the albumen become gelatinized and bonded to each other. As germ and albumen become gelatinized and bonded to each other, it becomes difficult to remove the germ by milling the brown rice, with the result that rice with germs having a high germ residual rate is obtained. Furthermore, because the brown rice is cooled by the cooling tank 33 and milled in a low-temperature condition, delicious rice that does not impair eating quality is obtained.

Partially-milled rice, rice with germs and white rice, all of which are obtained by milling the function-enriched brown rice manufactured by the manufacturing method for the present invention (hereinafter referred to as "function-enriched partially-milled rice", "function-enriched rice with germs", and "function-enriched white rice", respectively) can be handled in the same manner as in the case of partially-milled rice, rice with germs and white rice that are in circulation in the market in general. Therefore, with use of a conventional techniques for producing clean washed rice, it is easy to process the above-described function-enriched partially-milled rice, function-enriched rice with germs, and function-enriched white rice into function-enriched clean washed partially-milled rice, function-enriched clean washed rice with germs, and function-enriched clean washed rice, respectively (Step S6).

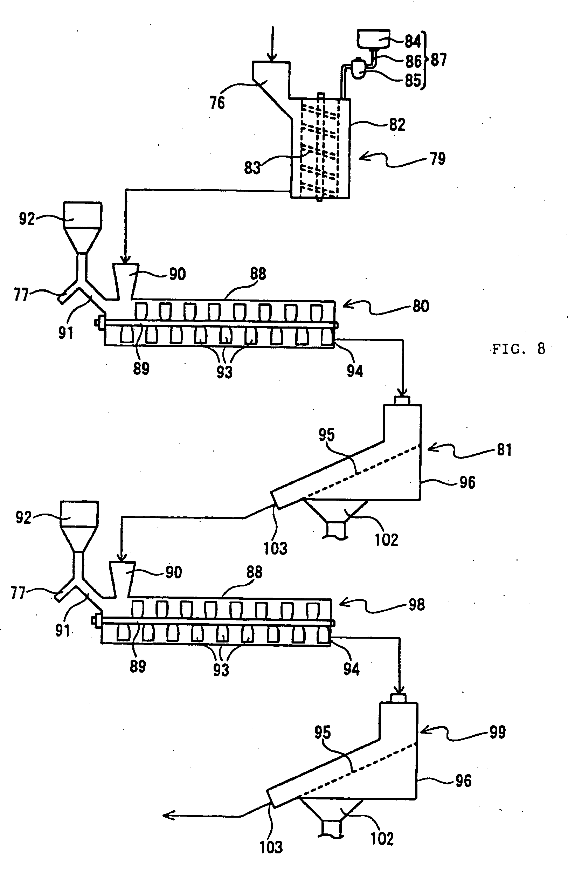

Now an outline of techniques for producing clean washed rice will be described taking the above-described function-enriched white rice as an example. As a technique for obtaining clean washed rice, it is possible to use a method for manufacturing clean washed rice as described in Japanese Patent Application Laid-Open No. 2001-259447, for example. The outline of this method for manufacturing clean washed rice will be given by using FIG. 8.

FIG. 8 is a diagram that shows steps of a manufacturing method for clean washed rice. The manufacturing of clean washed rice is performed by using moisture adding means 79, stirring and mixing means 80 and separation means 81. In the moisture adding means 79, moisture is added to function-enriched white rice. Pulverized rice is added by the stirring andmixingmeans 80 to the function-enriched white rice to which moisture has been added, and polishing of the function-enriched white rice is performed by stirring this function-enriched white rice in this state. After that, the function-enriched white rice thus polished and the pulverized rice that has been used are separated from each other by the separation means 81.

The moisture adding means 79 is constituted by a cylindrical white rice guiding cylinder 82 and a spiral rotor 83 that is rotatably provided within the white rice guiding cylinder 82. A moisture adding device 87 constituted by a water tank 84, a solenoid valve 85, a water pipe 86 and the like is connected to any position of the white rice guiding cylinder 82. Function-enriched white rice is fed from a hopper 76 and the spiral rotor 83 is rotated within the white rice guiding cylinder 82 to roll rice grains, whereby the moisture (for example, moisture contents corresponding to 3 to 5% of the rice grain weight) from the moisture adding device 87 is added to the rice grains. By setting the time required for the function-enriched white rice passing through the white rice guiding cylinder 82 to 15 seconds or so, for example, it is possible to prevent checking from occurring in the rice grains and it is possible to safely add moisture to the function-enriched white rice. The surface of the function-enriched white rice to which moisture has been added in this manner comes to a slightly softened condition.

The function-enriched white rice that has been discharged from the moisture adding means 79 is immediately charged into the stirring and mixing means 80 so that the function-enriched white rice is mixed with pulverized rice and stirred. The stirring and mixing means 80 is constituted by a drum-like machine frame 88 and a stirring device 89 rotatably provided within the machine frame 88. To the side of one end of this machine frame 88 are connected a milled white rice supply trough 90 that receives rice grains discharged from the moisture adding means 79 and a pulverized rice supply trough 91 of pulverized rice transferred by transportation means. As transportation means that supplies pulverized rice to the pulverized rice supply trough 91, for example, an air transfer system is used. In this case, a cyclone separator 92 for airflow separation is connected to the top end of the pulverized rice supply trough 91, whereas a pulverized rice discharge trough 77 is connected to the cyclone separator 92 as a branch separate from the pulverized rice supply trough 91.

The stirring device 89 is provided with a plurality of stirring vanes 93, which are rotated by the power from a motor and the like. When the stirring vanes 93 are rotated, the function-enriched white rice and the pulverized rice are mixed and stirred within the machine frame 88, and mixed rice is discharged from a discharge port 94 provided on the other end side of the machine frame 88.

The function-enriched white rice fed into the stirring and mixing means 80 is stirred and mixed with the pulverized rice which was finished to have moisture of less than 5%. Owing to this action, aleurone that has swollen by absorbing the moisture near the surface of the function-enriched white rice is adsorbed by the pulverized rice and floats from aleurone partitions, and the polishing of the function-enriched white rice is performed by a slight frictional action among the grains of the function-enriched white rice and the pulverized rice. It is preferred that the mixing ratio of the function-enriched white rice and the pulverized rice be 5 to 30 parts by weight of pulverized rice to 100 parts by weight of function-enriched white rice.

The separation means 81 may be a screening device of any construction so long as it is capable of separating function-enriched white rice and pulverized rice from each other, and it is possible to use a pre-cleaner 96 provided with a screen net 95 in a tensioned state. It is possible to give vibrations to this pre-cleaner 96 by the power from a motor (not shown).

The function-enriched white rice that has been obtained by the separation means 81 as described above becomes clean washed rice from which the bran remaining on the surfaces of the rice grains is removed. To improve the whiteness of the clean washed rice and increase productivity, second stirring and mixing means 98 and second separation means 99 can be provided on the downstream side of the separation means 81. As a result of this, the bran remaining on the surfaces of the rice grains is completely peeled and removed and it is possible to manufacture function-enriched clean washed rice that is glossy and has improved whiteness.

It is possible to process the above-described function-enriched partially-milled rice and the above-described function-enriched rice with germs into clean washed rice by a technique for processing rice into clean washed rice by means of steam, as described in Japanese Patent Application Laid-Open No. 2002-166485, for example. Naturally, this technique for processing rice into clean washed rice by means of steam can also be used in function-enriched white rice. By using superheated steam in place of steam, it becomes possible to perform the heat sterilization treatment of rice grains at higher temperatures (Step S7).

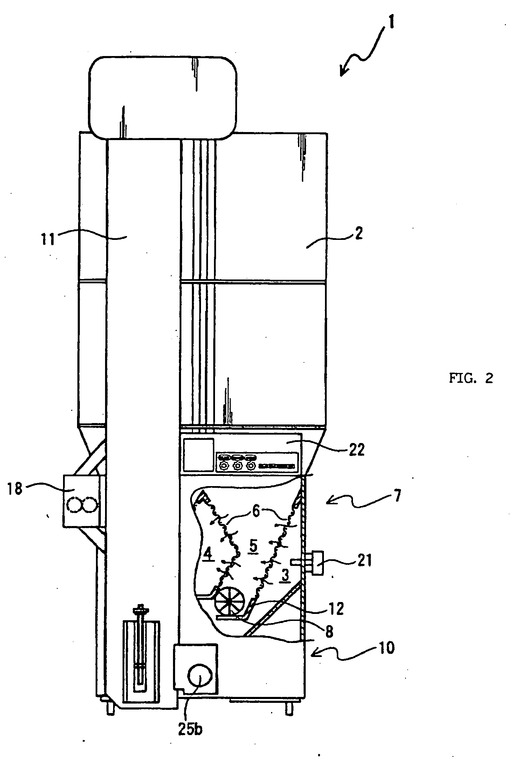

As one of the embodiments of the present invention, the brown rice of variety "KOSHIHIKARI" (a product of Hiroshima Prefecture, Japan, harvest of 2004) was processed by the manufacturing method for the present invention. By use of the water adding and drying device 1 shown in FIGS. 2 and 3, water was added so that the moisture of the brown rice of "KOSHIHIKARI" does not exceed 18.5% at water addition rates of less than 0.2%/hour. In this water adding operation, the relative humidity of moistened air was not less than 95%, the temperature of the moistened air was kept at 15°C for 2 hours after the start of water addition, the temperature was raised 5°C for each two hours afterward, and eventually, moistened air of temperature 35°C is applied for 16 hours for adding water. After completion of the water adding operation, this "KOSHIHIKARI" was left at rest in the storage tank 2 of the water adding and drying device 1 for 10 hours, whereby the amount of the γ-aminobutyric acid contained in this "KOSHIHIKARI" was increased. After leaving the "KOSHIHIKARI" at rest, drying was performed by drying operation and function-enriched brown rice of "KOSHIHIKARI" was obtained. Furthermore, the above-described function-enriched brown rice was milled by means of a conventional rice milling method to obtain function-enriched white rice. Also for each of variety "HITOMEBORE" (a product of Hiroshima Prefecture, Japan, harvest of 2004) and variety "KIRARA 397" (a product of Hokkaido, Japan, harvest of 2004), function-enriched brown rice and function-enriched white rice were manufactured and obtained under the same manufacturing conditions.

Table 1 shows the amount and whiteness of the γ-aminobutyric acid contained in the function-enriched brown rice and function-enriched white rice of "KOSHIHIKARI" thus obtained. For the above-described "HITOMEBORE," the amount and whiteness of the γ-aminobutyric acid contained in the function-enriched brown rice and function-enriched white rice are shown in Table 2, and for the above-described "KIRARA 397, " the amount and whiteness of the γ-aminobutyric acid contained in the function-enriched brown rice and function-enriched white rice are shown in Table 3. The measurement of γ-aminobutyric acid was made by use of a high-speed liquid chromatograph (made by Shimadzu Corporation, LC-VP) and whiteness was measured by use of a whiteness meter (Kett Electric Laboratory, C-300).

**[Table 1]**

| "KOSHIHIKARI" (a product of Hiroshima Prefecture, harvest of 2004) | | |
|---|---|---|
| | Whiteness | γ-aminobutyric acid content (mg/100 g) |
| Raw-material brown rice | 20.7 | 8.8 |
| Function-enriched brown rice | 20.6 | 18.0 |
| Raw-material white rice | 41.5 | 3.1 |
| Function-enriched white rice | 39.6 | 10.1 |

**[Table 2]**

| "HITOMEBORE" (a product of Hiroshima Prefecture, harvest of 2004) | | |
|---|---|---|
| | Whiteness | γ-aminobutyric acid content (mg/100 g) |
| Raw-material brown rice | 20.3 | 4.8 |
| Function-enriched brown rice | 21.2 | 11.9 |
| Raw-material white rice | 40.4 | 1.6 |
| Function-enriched white rice | 40.2 | 8.1 |

**[Table 3]**

| "KIRARA 397" (a product of Hokkaido, harvest of 2004) | | |
|---|---|---|
| | Whiteness | γ-aminobutyric acid content (mg/100 g) |
| Raw-material brown rice | 20.2 | 6.3 |
| Function-enriched brown rice | 20.1 | 13.0 |
| Raw-material white rice | 37.6 | 2.4 |
| Function-enriched white rice | 38.3 | 6.4 |

In Table 1, to show the increase ratio of γ-aminobutyric acid in the function-enriched brown rice and the function-enriched white rice, the brown rice of "KOSHIHIKARI" used as the raw material is indicated as "raw-material brown rice" and the white rice obtained by milling this brown rice is indicated as "raw-material white rice." For the raw-material brown rice and the function-enriched brown rice, the γ-aminobutyric acid content of the function-enriched brown rice became not less than twice that of the raw-material brown rice. For the raw-material white rice and the function-enriched white rice, the y-aminobutyric acid content of the function-enriched brown rice became about 3.3 times that of the raw-material white rice. No clear difference in whiteness was observed between the raw-material brown rice and the function-enriched brown rice or between raw-material white rice and the function-enriched white rice.

Incidentally, for "HITOMEBORE" and "KIRARA 397," experiment results that both have the same tendency as "KOSHIHIKARI" were obtained.

## Claims

1. A method for manufacturing brown rice having increased contents of functional components, comprising the steps of:
adding water to brown rice that is being transferred in a circulating manner;
leaving the brown rice at rest after completion of the adding of water in a state where the circulated transfer of the brown rice and blowing of air are stopped; and
drying the brown rice after leaving the brown rice at rest;
wherein, in the step of adding water to brown rice, water addition is preformed at water addition rates of not more than 0.3% per hour by blowing high-humidity air so that the moisture of the brown rice rises in the range of 16.5 to 18.5%.

2. The method for manufacturing brown rice having increased contents of functional components according to claim 1, wherein, in the step of adding water to brown rice, the volume of air for blowing the brown rice is 0.2 to 0.6 m³/second·ton.

3. The method for manufacturing brown rice having increased contents of functional components according to claim 1, wherein, in the step of leaving the brown rice at rest, the time required for leaving the brown rice at rest is 2 to 25 hours.

4. Brown rice having increased contents of functional components that is manufactured by the manufacturing method according to any one of claims 1 to 3.

5. Partially-milled rice, rice with germs or white rice each having increased contents of functional components that are obtained by milling the brown rice according to claim 4.

6. Clean washed partially-milled rice, clean washed rice with germs or clean washed rice each having increased contents of functional components that are respectively obtained by processing the partially-milled rice, rice with germs or white rice according to claim 5 to clean washed rice.

## Patentansprüche

1. Verfahren zur Herstellung von braunem Reis mit einem höheren Gehalt an funktionellen Komponenten, umfassend die Schritte:
Zugeben von Wasser zu braunem Reis, der kreisförmig umlagert wird;
Ruhenlassen des braunen Reises nach Beendigung der Wasserzugabe in einem Zustand, in dem das kreisförmige Umlagern des braunen Reises und das Einblasen von Luft gestoppt worden sind; und
Trocknen des braunen Reises nach dem Ruhenlassen des braunen Reises,
wobei bei dem Schritt der Zugabe von Wasser zu braunem Reis die Wasserzugabe mit Wasserzugaberaten von nicht mehr als 0,3% pro Stunde durch Einblasen von sehr feuchter Luft erfolgt, so dass der Feuchtigkeitsgehalt des braunen Reises in den Bereich von 16,5 bis 18,5% steigt.

2. Verfahren zur Herstellung von braunem Reis mit einem höheren Gehalt an funktionellen Komponenten nach Anspruch 1, wobei bei dem Schritt der Zugabe von Wasser zu braunem Reis das Volumen der Luft zum Anblasen des braunen Reises 0,2 bis 0,6 m³/Sekunde. Tonne beträgt.

3. Verfahren zur Herstellung von braunem Reis mit einem höheren Gehalt an funktionellen Komponenten nach Anspruch 1, wobei bei dem Schritt des Ruhenlassens des braunen Reises die zum Belassen des braunen Reises erforderliche Zeit 2 bis 25 Stunden beträgt.

4. Brauner Reis mit einem höheren Gehalt an funktionellen Komponenten, der durch das Herstellungsverfahren nach einem der Ansprüche 1 bis 3 hergestellt wird.

5. Teilweise geschliffener Reis, Reis mit Keim oder weißer Reis, jeweils mit einem höheren Gehalt an funktionellen Komponenten, die erhalten werden durch Schleifen des braunen Reises nach Anspruch 4.

6. Gewaschener teilweise geschliffener Reis, gewaschener Reis mit Keim oder gewaschener Reis, jeweils mit einem höheren Gehalt an funktionellen Komponenten, die jeweils erhalten werden durch Verarbeiten von teilweise geschliffenem Reis, Reis mit Keim oder weißem Reis nach Anspruch 5 zu gewaschenem Reis.

## Revendications

1. Procédé de fabrication d'un riz brun ayant un contenu accru de composants fonctionnels, comprenant les étapes consistant à :
ajouter de l'eau au riz brun qui est transféré de manière circulante ;
laisser le riz brun au repos à la fin de l'ajout d'eau dans un état où le transfert circulant du riz brun et le soufflage d'air sont interrompus ; et
sécher le riz brun après avoir laissé le riz brun au repos ;
dans lequel, au cours de l'étape d'ajout d'eau au riz brun, l'ajout d'eau est réalisé à des débits d'ajout d'eau non supérieurs à 0,3 % par heure en soufflant de l'air à humidité élevée, de sorte que l'humidité du riz brun s'élève dans la plage de 16,5 à 18,5 %.

2. Procédé de fabrication d'un riz brun ayant un contenu accru de composants fonctionnels selon la revendication 1, dans lequel, au cours de l'étape d'ajout d'eau au riz brun, le volume d'air pour le soufflage du riz brun est de 0,2 à 0,6 m³/seconde.tonne.

3. Procédé de fabrication d'un riz brun ayant un contenu accru de composants fonctionnels selon la revendication 1, dans lequel, au cours de l'étape consistant à laisser le riz brun au repos, la durée requise pour laisser le riz brun au repos est de 2 à 25 heures.

4. Riz brun ayant un contenu accru de composants fonctionnels qui est fabriqué par le procédé de fabrication selon l'une quelconque des revendications 1 à 3.

5. Riz partiellement usiné, riz avec germes ou riz blanc ayant chacun un contenu accru de composants fonctionnels, qui sont obtenus par usinage du riz brun selon la revendication 4.

6. Riz partiellement usiné lavé, riz lavé avec germes ou riz blanc lavé ayant chacun un contenu accru de composants fonctionnels qui sont respectivement obtenus par traitement du riz partiellement usiné, du riz avec germes ou du riz blanc selon la revendication 5 en riz lavé.
